# EUROPÄISCHE PATENTSCHRIFT

(11) **EP 2 982 962 B1**
(45) Veröffentlichungstag und Bekanntmachung des Hinweises auf die Patenterteilung: **01.01.2020**
(21) Anmeldenummer: 14180157.1
(22) Anmeldetag: 07.08.2014
(51) Int. Cl.: G01N 17/00, G01D 11/24

(54) **Sensoreinrichtung mit mehreren Sensoren für eine Bewitterungsvorrichtung**
Sensor device with several sensors for a weathering device
Dispositif de capteur doté de plusieurs capteurs pour un dispositif d'exposition aux agents atmosphériques

(43) Veröffentlichungstag der Anmeldung: 10.02.2016
(73) Patentinhaber: Atlas Material Testing Technology GmbH, 63589 Linsengericht/Altenhasslau (DE)
(72) Erfinder: Rudolph, Bernd, 63755 Alzenau (DE); March, Peter, 60326 Frankfurt am Main (DE)
(74) Vertreter: Lambsdorff & Lange Patentanwälte Partnerschaft mbB

(56) Entgegenhaltungen:
- EP-A1- 1 724 565
- EP-A2- 1 624 297
- EP-A2- 1 710 559
- WO-A1-2005/040768
- WO-A1-2014/091660
- JP-A- 2008 202 980

## Beschreibung

Die vorliegende Erfindung bezieht sich auf eine Sensoreinrichtung für eine Vorrichtung zur Bewitterung oder Lichtechtheitsprüfung von Proben und auf eine Vorrichtung zur Bewitterung oder Lichtechtheitsprüfung von Proben.

In Vorrichtungen zur künstlichen Bewitterung wird eine Bewertung des witterungsbedingten Alterungsverhaltens einer Probe, insbesondere einer flächigen Werkstoffprobe, durchgeführt, wobei die Probe einer künstlichen Bewitterung ausgesetzt wird. Derartige Vorrichtungen weisen zu diesem Zweck üblicherweise eine Bewitterungskammer auf, in welcher Halterungsmittel für die Halterung von zu bewitternden Proben und eine Strahlungsquelle zur Beaufschlagung der Proben mit Strahlung, insbesondere mit UV-Strahlung, angeordnet sind.

In derartigen Vorrichtungen zur künstlichen Bewitterung oder Lichtechtheitsprüfung von Werkstoffproben soll zumeist die Lebensdauer von Werkstoffen abgeschätzt werden, die in ihrer Anwendung ständig den natürlichen Wetterverhältnissen ausgesetzt sind und sich somit unter klimatischen Einflüssen wie Sonnenlicht, Sonnenwärme, Feuchtigkeit und dergleichen verschlechtern. Um eine gute Simulation der natürlichen Witterungsgegebenheiten zu erhalten, ist es von Vorteil, wenn die spektrale Energieverteilung des in der Vorrichtung erzeugten Lichtes möglichst derjenigen der natürlichen Sonnenstrahlung entspricht, aus welchem Grund in solchen Geräten als Strahlungsquelle Xenon-Gasentladungslampen eingesetzt werden können. Zusätzlich wird eine zeitraffende Alterungsprüfung der Werkstoffe im Wesentlichen durch eine gegenüber den natürlichen Verhältnissen stark intensivierte Bestrahlung der Proben erzielt, wodurch die Alterung der Proben beschleunigt wird. Somit lässt sich nach verhältnismäßig kurzer Zeit eine Aussage über das Langzeit-Alterungsverhalten einer Werkstoffprobe machen.

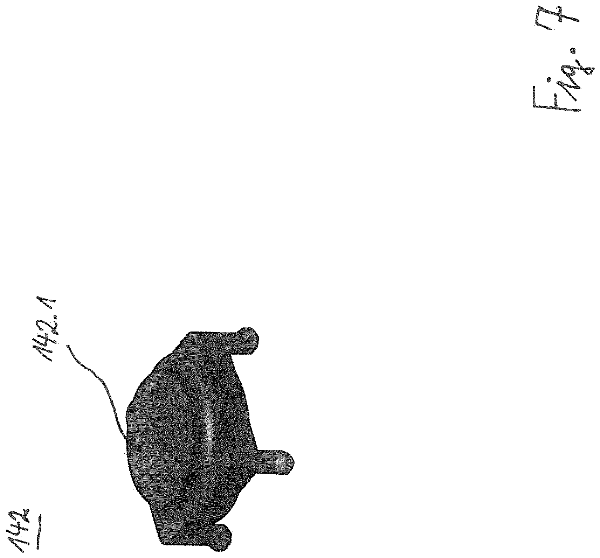

Die Druckschrift EP 1 710 559 A2 beschreibt generell einen Zusammenbau eines Schwarzstandardsensors für den Gebrauch in einer Bewitterungskammer. Die Fig. 7 zeigt eine derartige Bewitterungskammer, in welcher neben dem Schwarzstandardsensor auch ein oder weitere Sensoren angeordnet sind, mit welchen eine Bestrahlungsstärke, eine Feuchtigkeit oder eine Temperatur gemessen werden können.

Die Druckschrift EP 1 624 297 A2 beschreibt eine Bewitterungsvorrichtung, welche eine oder mehrere UV-Strahlungsquellen und einen oder mehrere UV-Sensoren aufweist. Die UV-Sensoren können für verschiedene spektrale Empfindlichkeitsbereiche im UV kalibriert sein.

Die Druckschrift WO 2014/091660 A1 beschreibt eine Umwelttestvorrichtung, in welcher kontinuierlich Luft umgewälzt und einer Testkammer zugeführt wird und ein Teil der Luft befeuchtet und erhitzt wird und in der Testkammer ein Temperatursensor und ein Feuchtigkeitssensor angebracht sind.

Die Druckschrift WO 2005/040768 A1 beschreibt eine Bewitterungsvorrichtung mit einer Messkammer zur Aufbewahrung von zu bewitternden Proben, wobei die Messkammer von einem Luftstrom durchströmt wird und innerhalb der Messkammer ein Schwarztafelsensor, weitere Temperatursensoren und ein Feuchtigkeitssensor angeordnet sind.

Die Druckschrift JP 2008 202980 beschreibt eine Bewitterungsvorrichtung mit einem UV-Strahlungssensor und einem Schwarztafelsensor.

Es ist Aufgabe der vorliegenden Erfindung, eine verbesserte Vorrichtung zur Bewitterung oder Lichtechtheitsprüfung von Proben, insbesondere eine solche mit verbesserter Sensorik, anzugeben. Diese Aufgabe wird durch die Merkmale des unabhängigen Patentanspruchs gelöst. Vorteilhafte Weiterbildungen und Ausführungsformen sind in den Unteransprüchen angegeben.

Im Folgenden wird die Erfindung anhand von Ausführungsbeispielen in Verbindung mit den Zeichnungsfiguren näher erläutert. Es zeigen:
Figuren 1A, B einen Querschnitt (A) und einen Längsschnitt (B) durch eine Ausführungsform einer Vorrichtung zur künstlichen Bewitterung oder Lichtechtheitsprüfung mit einer Anzahl zu bewitternder Proben und einer mitgeführten Sensoreinrichtung.
Fig. 2 eine perspektivische Ansicht einer Sensoreinrichtung gemäß einer Ausführungsform.
Fig. 3 die in Fig. 2 gezeigte Sensoreinrichtung nach Entfernung der Platte.
Fig. 4 die in Fig. 3 gezeigte Sensoreinrichtung in einem Längsschnitt.
Fig. 5 eine perspektivische Ansicht einer ersten Schaltungsplatine mit einem daran befestigten Sensorkopf des kombinierten Lufttemperatur-/Luftfeuchtigkeitssensors und einer zweiten Schaltungsplatine mit einem daran befestigten Strahlungssensor.
Fig. 6 eine perspektivische Ansicht eines Sensorkopfes mit einem daran befestigten kombinierten Lufttemperatur-/ Luftfeuchtigkeitssensor.
Fig. 7 eine perspektivische Ansicht eines kombinierten Lufttemperatur-/Luftfeuchtigkeitssensors.
Fig. 8 eine perspektivische Ansicht einer ersten Schaltungsplatine mit einem daran befestigten Sensorkopf mit dem kombinierten Lufttemperatur-/Luftfeuchtigkeitssensor und einem mit der ersten Schaltungsplatine verbundenen elektrischen Anschluss.
Fig. 9 ein Blockschaltbild eines elektrischen Schaltkreises einer Sensoreinrichtung.

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen der vorliegenden Erfindung in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Die folgende ausführliche Beschreibung ist deshalb nicht in einschränkendem Sinne aufzufassen und der Schutzumfang der vorliegenden Erfindung wird durch die angefügten Ansprüche definiert.

Ein Großteil der in Bewitterungsgeräten untersuchten Werkstoffproben besteht aus polymeren Werkstoffen. Bei diesen wird die witterungsbedingte Verschlechterung im Wesentlichen durch den UV-Anteil der Sonnenstrahlung hervorgerufen. Die dabei ablaufenden fotochemischen Primärprozesse, also die Absorption von Photonen und die Erzeugung angeregter Zustände oder freier Radikale, sind temperaturunabhängig. Dagegen können die nachfolgenden Reaktionsschritte mit den Polymeren oder Additiven temperaturabhängig sein, so dass die beobachtete Alterung der Werkstoffe ebenfalls temperaturabhängig ist. Der Grad der Temperaturabhängigkeit ist von dem zu untersuchenden Werkstoff und der betrachteten Eigenschaftsänderung abhängig.

Um dieser Tatsache Rechnung zu tragen, kann bei der künstlichen Bewitterung von polymeren Werkstoffen die Raumtemperatur und/oder die Probentemperatur konstant gehalten werden. Die Konstanthaltung und die Kenntnis der Temperaturen sind wegen der Temperaturabhängigkeit der Alterung von Bedeutung, um die Resultate verschiedener Bewitterungsläufe untereinander vergleichen zu können.

Da es problematisch ist, die Probentemperatur der zu untersuchenden Werkstoffproben direkt zu messen, können in einem erfindungsgemässen Bewitterungsprüfgerät ein oder mehrere Temperatursensoren eingesetzt werden, deren gemessene Temperatur als ein Maß für die Probentemperatur verwendet werden kann. Als derartige Temperatursensoren können Schwarztafelsensoren oder Schwarzstandardsensoren und optional Weißstandardsensoren eingesetzt werden. Wenn im Folgenden nur noch von Schwarzstandardsensoren die Rede sein wird, so sollen damit auch Schwarztafelsensoren mit umfasst sein. Ein Bewitterungsprüfgerät kann beispielsweise eine Bewitterungskammer aufweisen, in welcher eine Xenon-Strahlungsquelle als Lichtquelle zur Abgabe von Licht mit einer vorbestimmten Intensität vorgesehen sein kann. Innerhalb der Bewitterungskammer kann sich ein zylindersymmetrischer Probenhalterrahmen befinden, der um die Strahlungsquelle drehbar gehaltert ist. Von diesem Probenhalterrahmen können sowohl zu untersuchende Werkstoffproben als auch Schwarzstandardsensoren getragen werden, so dass die Werkstoffproben und die Schwarzstandardsensoren unter gleichen Bedingungen dem Strahlungsfeld der Lichtquelle und den übrigen, innerhalb der Bewitterungskammer eingestellten Bedingungen ausgesetzt sind. Um die Probentemperatur innerhalb bestimmter Grenzen steuern zu können und um sie innerhalb der Bewitterungskammer zu vergleichmäßigen, kann zusätzlich ein Luftstrom in die Bewitterungskammer eingeleitet werden, der zylindersymmetrisch bezüglich der Strahlungsquelle an dem Probenhalterrahmen und den darin gehalterten Werkstoffproben und dem Schwarzstandardsensor vorbeistreicht. Der Luftstrom kann dabei einen Teil der Wärme der Werkstoffproben und des Schwarzstandardsensors abführen. Dies kann beispielsweise für eine Temperaturregelung ausgenutzt werden, indem die von dem Schwarzstandardsensor gemessene Temperatur als ein Regelsignal für die Stärke des in die Bewitterungskammer eingeleiteten Luftstroms verwendet wird.

In einem erfindungsgemässen Bewitterungsprüfgerät können jedoch auch noch weitere Sensoren zum Einsatz kommen, um die Steuerung von Bewitterungsläufen und deren Vergleichbarkeit untereinander weiter zu verbessern. Es kann beispielsweise die Strahlungsleistung der Lichtquelle, insbesondere von deren UV-Anteil, erfasst werden. Des Weiteren kann die Temperatur der innerhalb der Bewitterungskammer vorhandenen Luftströmung sowie deren relative Feuchtigkeit durch geeignete Sensoren detektiert werden. Die Ausgangssignale dieser verschiedener Sensoren können dann einer Steuereinrichtung zugeführt und kontinuierlich über den Bewitterungslauf erfasst und aufgezeichnet werden. Sie können auch dazu verwendet werden, um seitens der Steuereinrichtung aktiv in den Bewitterungslauf einzugreifen und bestimmte Parameter gezielt zu verändern.

Außer in den oben beschriebenen Vorrichtungen zur künstlichen Bewitterung können Bewitterungsprüfungen auch in sogenannten Freibewitterungsanlagen durchgeführt werden. In diesen wird die Bewitterung unter natürlichen Bedingungen, d.h. natürlicher Sonneneinstrahlung, durchgeführt, wobei die Lichtintensität durch geeignete Spiegelanordnungen künstlich verstärkt werden kann.

Insbesondere ist es ein Gedanke der vorliegenden Anmeldung, eine Sensoreinrichtung für eine Vorrichtung zur Bewitterung oder Lichtechtheitsprüfung von Proben anzugeben, mit welcher eine Mehrzahl von Sensorfunktionen konstruktiv zusammengefasst werden kann.

Eine erfindungsgemäße Sensoreinrichtung für eine Vorrichtung zur Bewitterung oder Lichtechtheitsprüfung von Proben umfasst ein Sensorgehäuse, mit welchem mindestens zwei verschiedene Sensoren verbunden sind. Diese zwei verschiedenen Sensoren werden aus einer Gruppe von Sensoren ausgewählt, in welcher ein Schwarzstandardsensor, ein UV-Strahlungssensor, ein Lufttemperatursensor und ein Luftfeuchtigkeitssensor enthalten sind. In einer derartigen Sensoreinrichtung wären somit die mindestens zwei Sensoren in kompakter Form an einem einzelnen Sensorgehäuse verbaut, welches an beliebiger Stelle innerhalb einer Bewitterungskammer oder in einer Freibewitterungsanlage angeordnet werden könnte. Ein derartiges Sensorgehäuse könnte beispielsweise auf Probenebene an einem Halterungsrahmen befestigt werden und könnte somit von einem drehbaren Halterungsrahmen wie eine zu bewitternde Probe um eine Strahlungsquelle bewegt werden. Es müssten nicht die zwei Sensoren einzeln an verschiedenen Orten innerhalb der Bewitterungskammer oder an dem Halterungsrahmen befestigt werden. Diese Vorteile gelten in gleicher Weise für stationäre Bewitterungsprüfgeräte, in welchen die Proben stationär in einer Bewitterungskammer gehaltert werden. Auch in diesen könnte eine erfindungsgemäße Sensoreinrichtung in gleicher Weise wie eine zu bewitternde Probe gehaltert und der Strahlung und den sonstigen künstlich erzeugten Bewitterungsbedingungen ausgesetzt werden.

Es können auch mehr als zwei Sensoren, insbesondere mehr als zwei Sensoren aus der genannten Gruppe, in oder an dem Sensorgehäuse angebracht sein.

In einer erfindungsgemäßen Sensoreinrichtung ist ein Schwarzstandardsensor an einer äußeren Wand des Sensorgehäuses befestigt. Die äußere Wand ist durch eine von einer ersten Außenwand des Sensorgehäuses beabstandete Platte gebildet. In dieser Platte und in der ersten Außenwand können dann Strahlungsdurchtrittsöffnungen für den Durchtritt von UV-Strahlung gebildet sein. Das Sensorgehäuse kann insbesondere eine quaderförmige Grundform aufweisen, wobei die Platte rechteckförmig gebildet sein kann und im Wesentlichen gleiche Abmessungen wie die erste Außenwand aufweisen kann. Sie kann an ihren vier Ecken mittels vier Schrauben an die erste Außenwand befestigt sein, wobei die Schrauben innerhalb von Abstandshülsen geführt werden, die sich zwischen der Platte und der ersten Außenwand befinden und für den gewünschten Abstand zwischen Platte und ersten Außenwand sorgen.

Gemäß einer Ausführungsform der Sensoreinrichtung kann in der ersten Außenwand oder gegebenenfalls auch in einer anderen Außenwand des Sensorgehäuses eine Luftdurchtrittsöffnung für den Durchtritt von Umgebungsluft zu dem Lufttemperatursensor und dem Luftfeuchtigkeitssensor gebildet sein. Insofern die Luftdurchtrittsöffnung in der ersten Außenwand des Sensorgehäuses gebildet ist, so hätte dies den Vorteil, dass sie im Betrieb in der Bewitterungskammer von der Strahlung der Strahlungsquelle abgeschirmt werden könnte, indem nämlich die beabstandet gehalterte Platte die Luftdurchtrittsöffnung abdeckt. Dies wäre automatisch der Fall, wenn die Platte - wie oben beschrieben - im Wesentlichen gleiche Außenabmessungen wie die erste Außenwand des Sensorgehäuses aufweisen würde.

Gemäß einer Ausführungsform der Sensoreinrichtung ist innerhalb des Sensorgehäuses eine elektrische Leistungsversorgung, wie eine Batterie oder ein Akkumulator, angeordnet. Diese ist mit einer Schaltung verbunden und versorgt sowohl Bauelemente der Schaltung als auch die Sensoren mit den notwendigen elektrischen Spannungen.

Gemäß einer Ausführungsform der Sensoreinrichtung ist innerhalb des Sensorgehäuses eine erste Schaltungsplatine angeordnet, auf welcher eine Steuereinheit angeordnet sein kann, welcher Ausgangssignale der Sensoren zuführbar sind. Es kann ferner vorgesehen sein, dass auf der ersten Schaltungsplatine eine erste Speichereinheit angeordnet ist, auf welcher Daten gespeichert sind, welche für den UV-Strahlungssensor spezifisch sind. Die erste Speichereinheit kann beispielsweise einen DRAM-Speicher, insbesondere einen ferroelektrischen DRAM-Speicher (FRAM), aufweisen. Die Steuereinheit kann ferner eine zweite Speichereinheit aufweisen, auf welcher Daten gespeichert sind, welche für eine Strahlungsquelle der Vorrichtung, insbesondere eine Xenon-Strahlungsquelle, spezifisch sind.

Gemäß einer Ausführungsform der Sensoreinrichtung sind der Lufttemperatursensor und der Luftfeuchtigkeitssensor in einem gemeinsamen Gehäuse angeordnet, welches innerhalb des Sensorgehäuses angeordnet ist. Das gemeinsame Gehäuse kann für den Durchtritt der Luft zu den beiden Sensoren eine dampfdurchlässige und/oder mikroporöse Membran aufweisen.

Gemäß einer Ausführungsform der Sensoreinrichtung kann der UV-Strahlungssensor derart ausgebildet sein, dass er ein Kosinus-korrigiertes Messsignal generiert und dieses an die Steuereinheit übermittelt. Das bedeutet, dass der Sensor ausgebildet ist, die Abhängigkeit der gemessenen Strahlungsintensität vom Winkel zwischen der auftreffenden Strahlung und der Flächennormalen des Sensors oder eines Bildelements des Sensors zu berücksichtigen bzw. ein diese Abhängigkeit berücksichtigendes oder korrigierendes Messsignal zu erzeugen. Dies kann in einer einfachen Variante derart ausgeführt sein, dass der UV-Strahlungssensor ein Gehäuse mit einer Eintrittsöffnung und einer in der Eintrittsöffnung angeordneten Streuscheibe aufweist. Ein derartig aufgebauter UV-Strahlungssensor kann dann solchermaßen in den Strahldurchtrittsöffnungen der Platte und der Außenwand des Sensorgehäuses angeordnet sein, dass die Eintrittsöffnung des Gehäuses und die Streuscheibe sich außerhalb der Platte befinden und durch eine halbkugelförmige Schutzwand aus Quarzglas vor der Umgebung geschützt sind.

Gemäß einer Ausführungsform der Sensoreinrichtung ist diese für eine Übermittlung der Ausgangssignale der Sensoren an eine zentrale Steuereinheit ausgebildet, mit welcher beispielsweise auch die Bewitterungsläufe gesteuert werden können. Die Sensoreinrichtung kann insbesondere für eine drahtgebundene Übermittlung der Ausgangssignale der Sensoren ausgebildet sein, zu welchem Zweck die Sensoreinrichtung beispielsweise eine USB-Schnittstelle aufweisen kann. Im Falle von Bewitterungsprüfgeräten mit drehbarem Halterungsrahmen wird die Sensoreinrichtung wie die zu bewitternden Proben ständig von dem Halterungsrahmen um die Strahlungsquelle bewegt. In diesem Fall kann vorgesehen sein, dass die Sensoreinrichtung mit einer Schleifringanordnung gekoppelt ist, über welche die Ausgangssignale der Sensoren an die zentrale Steuereinheit übermittelt werden. Gemäß einer dazu alternativen Ausführungsform kann auch vorgesehen sein, dass die Sensoreinrichtung für eine drahtlose Übermittlung der Ausgangssignale der Sensoren an die zentrale Steuereinheit ausgelegt ist.

Gemäß einer Ausführungsform der Sensoreinrichtung ist das Sensorgehäuse in seinen äußeren Abmessungen derart ausgebildet, dass es wie eine zu bewitternde Probe innerhalb der Bewitterungskammer oder an einer Freibewitterungsanlage befestigbar ist, so dass der Schwarzstandardsensor der Strahlungsquelle zugewandt ist. Im Allgemeinen sind in derartigen Vorrichtungen entsprechend ausgebildete Aufnahmeelemente oder Aufnahmeeinrichtungen angeordnet, in oder an welchen die zu bewitternden Proben aufgenommen und geeignet befestigt werden können. Es kann demnach vorgesehen sein, dass die Sensoreinrichtung an eben denselben Aufnahmeelementen oder Aufnahmeeinrichtungen gehaltert und befestigt werden kann, ohne dass zusätzliche Maßnahmen ergriffen werden müssen.

Die Erfindung bezieht sich ebenso auf eine Vorrichtung zur Bewitterung oder Lichtechtheitsprüfung von Proben mit einer Halteeinrichtung zur Halterung von zu bewitternden Proben und einer Sensoreinrichtung, welche ein Sensorgehäuse aufweist, mit welchem eine Mehrzahl von Sensoren, insbesondere ein Lufttemperatursensor und Luftfeuchtigkeitssensor, verbunden sind. Die Sensoreinrichtung kann insbesondere so ausgestaltet sein, wie sie weiter oben beschrieben wurde.

Gemäß einer Ausführungsform der Vorrichtung sind Ausgangssignale der Sensoren an eine zentrale Steuereinheit übermittelbar, wobei ferner vorgesehen sein kann, dass Bewitterungsläufe von der zentralen Steuereinheit in Abhängigkeit von den Ausgangssignalen der Sensoren gesteuert bzw. in ihrem Ablauf verändert werden. Im Falle einer Vorrichtung zur künstlichen Bewitterung ist die zentrale Steuereinheit außerhalb der Bewitterungskammer angeordnet und beispielsweise durch einen PC und dessen Steuerungssoftware gegeben.

Gemäß einer Ausführungsform der Vorrichtung sind der Lufttemperatursensor und der Luftfeuchtigkeitssensor in einem gemeinsamen Gehäuse angeordnet, welches innerhalb des Sensorgehäuses angeordnet ist. Die weitere Ausgestaltung kann derart sein, wie es weiter oben bereits anhand der Sensoreinrichtung beschrieben wurde.

Gemäß einer Ausführungsform der Vorrichtung weist die Sensoreinrichtung ferner einen Schwarzstandardsensor und einen UV-Strahlungssensor auf, welche mit dem Sensorgehäuse verbunden sind. Auch deren weitere Ausgestaltung kann dem entsprechen, wie es weiter oben anhand der Sensoreinrichtung beschrieben wurde.

Gemäß einer Ausführungsform der Vorrichtung weist diese eine zentrale Steuereinrichtung wie einen PC zur Steuerung eines Bewitterungsvorgangs auf, wobei der zentralen Steuereinrichtung Ausgangssignale von mindestens einem der genannten Sensoren zuführbar sind. Die zentrale Steuereinrichtung kann insbesondere ausgebildet sein, um derartige Ausgangssignale drahtgebunden zu empfangen. Sie kann alternativ auch ausgebildet sein, die Ausgangssignale drahtlos zu empfangen.

Gemäß einer Ausführungsform der Vorrichtung weist diese Aufnahmeelemente oder Aufnahmeeinrichtungen auf, welche derart ausgebildet sind, dass in oder an ihnen die zu bewitternden Proben aufnehmbar und befestigbar sind. Es kann vorgesehen sein, dass diese Aufnahmeelemente und Aufnahmeeinrichtungen ebenso geeignet sind, eine Sensoreinrichtung aufzunehmen und zu befestigen, so dass diesbezüglich kein Unterschied zwischen Aufnahmeeinrichtungen besteht, welche eine zu bewitternde Probe und eine Sensoreinrichtung aufnehmen.

Gemäß einer Ausführungsform der Vorrichtung ist diese derart ausgebildet, dass sie eine Bewitterungskammer aufweist, in welcher eine künstliche Bewitterung oder Lichtechtheitsprüfung von Proben durchführbar ist. Hierbei kann vorgesehen sein, dass die Halteeinrichtung drehbar um eine Strahlungsquelle ausgebildet ist, so dass sich die Proben und mithin auch die Sensoreinrichtung in einer ständigen Drehbewegung um die Strahlungsquelle während eines Bewitterungslaufs befinden. Es kann jedoch auch vorgesehen sein, dass die zu bewitternden Proben stationär gehaltert werden und sich somit nicht in einer ständigen Bewegung während eines Bewitterungslaufs befinden.

Gemäß einer Ausführungsform der Vorrichtung ist diese als eine Vorrichtung zur Freibewitterung von Proben ausgebildet. Bei dieser findet demnach die Bewitterung nicht innerhalb einer geschlossenen Bewitterungskammer statt sondern unter natürlichen Bedingungen, insbesondere natürlicher Sonneneinstrahlung. Letztere kann gewünschtenfalls durch geeignete Spiegelanordnungen künstlich intensiviert werden.

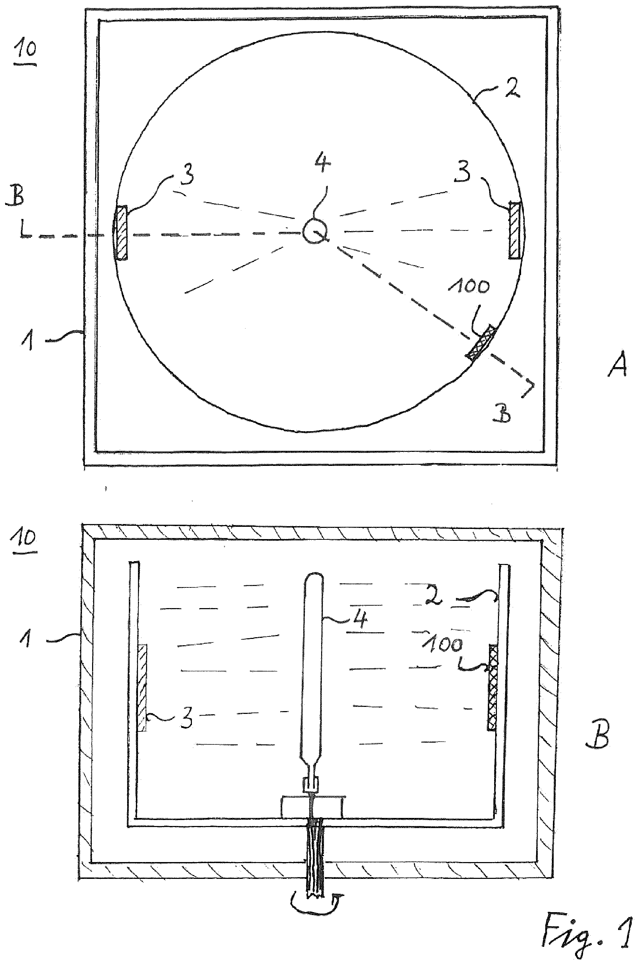

In den Figuren 1A, B ist eine Ausführungsform einer Vorrichtung zur künstlichen Bewitterung oder Lichtechtheitsprüfung von Proben in einem Querschnitt (A) und einem Längsschnitt (B) entlang der in Fig. 1A eingezeichneten gestrichelten Linie B-B jeweils schematisch dargestellt. Die Vorrichtung 10 umfasst eine Bewitterungskammer 1, innerhalb der eine künstliche Bewitterung oder Lichtechtheitsprüfung von Proben durchgeführt werden kann. In der Bewitterungskammer 1 ist ein ringförmig geschlossener Halterungsrahmen 2 drehbar gelagert, welcher auf seiner Innenseite geeignet geformte Halterungselemente (nicht gezeigt) aufweist, mittels derer Proben 3 oder Werkstücke, beispielsweise rechteckige Lackproben genormter Größe, gehaltert werden können. Der Halterungsrahmen 2 ist insbesondere in einem seitlichen Querschnitt kreisförmig, so dass die Proben 3 bei Drehung des Halterungsrahmens 2 auf einer geschlossenen Kreisbahn geführt werden. Innerhalb des Halterungsrahmens 2 und im Wesentlichen konzentrisch mit diesem ist eine Strahlungsquelle 4 angeordnet, welche beispielsweise durch eine Xenon-Gasentladungslampe gebildet sein kann. Es kann vorgesehen sein, dass eine Mehrzahl von Proben 3 an dem Halterungsrahmen 2, insbesondere an dafür vorgesehenen, in Umfangsrichtung des Halterungsrahmens 2 angeordneten Halterungselementen befestigt werden können. Es können darüber hinaus die Proben 3 auch in mehreren Ebenen übereinander am Halterungsrahmen 2 befestigt werden.

In der Bewitterungskammer 1 kann des Weiteren eine Sensoreinrichtung 100 angeordnet sein, welche verschiedene Sensorfunktionen erfüllen kann. Insbesondere kann sie dafür ausgebildet sein, die Strahlungsleistung der von der Strahlungsquelle 4 emittierten Strahlung und/oder andere Größen wie die Probentemperatur, die Lufttemperatur und die Luftfeuchtigkeit zu detektieren. Die Sensoreinrichtung 100 kann wie die Proben 3 an dem Halterungsrahmen 2 befestigt sein und mit diesen um die aus der Strahlungsquelle 4 bestehende Anordnung umlaufen, also als mitlaufende Sensoreinrichtung 100 ausgebildet sein. Die Ausgangssignale der Sensoreinrichtung 100 können einer externen zentralen Steuereinrichtung zugeführt werden. Insbesondere kann die Sensoreinrichtung 100 so ausgebildet sein, dass die von ihr detektierten Parameter als entsprechende elektrische Messsignale ausgegeben und der externen zentralen Steuereinrichtung zugeführt werden. Die Sensoreinrichtung 100 kann, wie dargestellt, in Bezug auf die Proben 3 in Umfangsrichtung der Halterungseinrichtung 2 versetzt angeordnet sein. Sie könnte ebenso gut auch ohne Umfangsversetzung in Höhenrichtung in Bezug auf die Proben 3 oder sowohl in Höhen- als auch in Umfangsrichtung mit Bezug auf die Proben 3 versetzt angeordnet sein.

Die Bewitterungskammer 1 kann weitere Einrichtungen zur künstlichen Bewitterung, wie beispielsweise Feuchtigkeitserzeuger oder dergleichen, aufweisen, auf die im Folgenden nicht weiter eingegangen werden soll. Es kann beispielsweise auch ein Luftstrom in die Bewitterungskammer 1 eingeleitet werden, der in vertikaler Richtung an den Proben 3 und/oder an der Strahlungsquelle 4 vorbeistreicht.

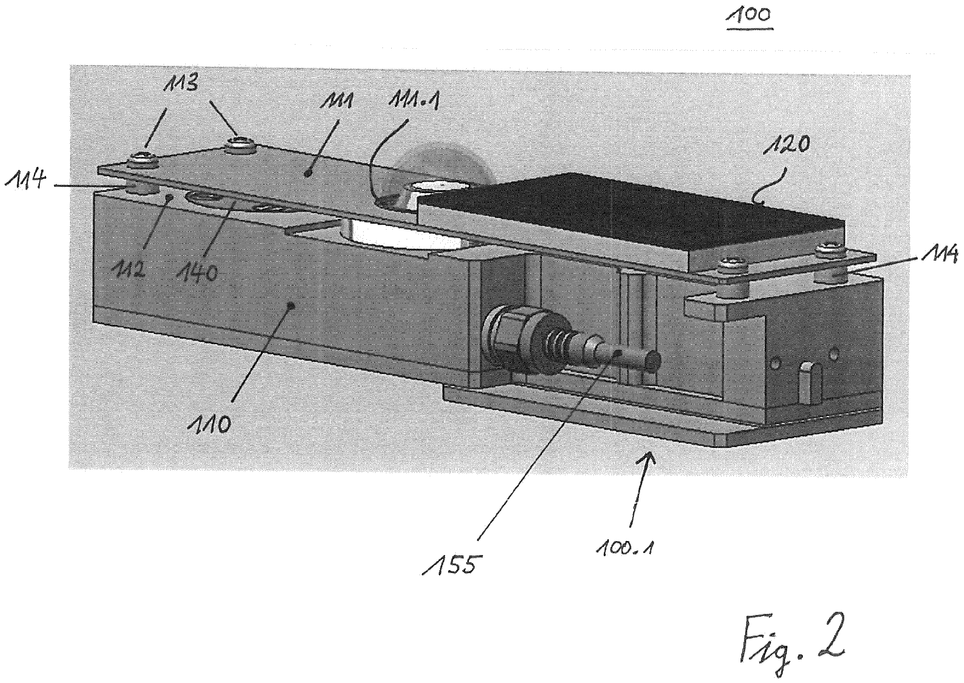

In der Fig. 2 ist eine Ausführungsform einer Sensoreinrichtung 100 perspektivisch dargestellt. Die Sensoreinrichtung 100 enthält ein Sensorgehäuse 110 aus Edelstahl, welches eine im Wesentlichen quaderförmige Grundform aufweist. Vor eine erste Außenwand 112 des Sensorgehäuses 110 ist eine Platte 111 in einem Abstand von der ersten Außenwand 112 an diese befestigt. Die Befestigung kann, wie dargestellt, durch im Bereich der vier Ecken der Platte 111 angeordnete Schrauben 113 erfolgen, die durch Abstandshülsen 114 zwischen der Platte 111 und der ersten Außenwand 112 geführt sind und in entsprechende Bohrungen im Bereich der vier Ecken der ersten Außenwand 112 geschraubt sind. An der Platte 111 ist ein Schwarzstandardsensor 120 befestigt, welcher im laufenden Betrieb einer Bewitterungsvorrichtung der Strahlungsquelle der Bewitterungsvorrichtung zugewandt ist.

Der Schwarzstandardsensor 120 kann so aufgebaut sein, dass er eine Edelstahlplatte mit einer im Betrieb der Strahlungsquelle zugewandten schwarz lackierten Oberfläche und ein an die Edelstahlplatte auf deren Rückseite thermisch angekoppeltes temperaturabhängiges elektrisches Bauelement aufweist. Das elektrische Bauelement kann durch einen temperaturabhängigen Widerstand wie einen Platinwiderstand (handelsübliche Bezeichnungen Pt100 oder Pt1000) gebildet sein und mit einer elektrischen Messumformerschaltung verbunden sein. Insbesondere kann auf der Rückseite der Edelstahlplatte eine den Platinwiderstand umschließende Kunststoffplatte aus PVDF (Polyvinylidenfluorid) und eine Abschlussplatte aus Edelstahl aufgebracht sein. Ein Schwarztafelsensor besteht im Unterschied zu dem Schwarzstandardsensor aus einer beidseitig geschwärzten Metallplatte ohne PVDF-Isolierung, wobei der temperaturabhängige Widerstand ohne umgebende Isolierung auf die Rückseite der Edelstahlplatte aufgebracht ist. Derartige Schwarzstandard- oder Schwarztafelsensoren können in Bewitterungsgeräten eingesetzt werden, um für jeden Bewitterungsprozess eine Schwarzstandardtemperatur angeben zu können. Die Schwarzstandardtemperatur stellt eine obere Grenze für den in Frage kommenden Bereich der Oberflächentemperatur der Werkstoffprobe dar. Zusätzlich kann ein Weißstandardsensor eingesetzt werden, dessen Temperaturmessung eine untere Grenze dieses Bereichs bereitstellt. Somit kann die Probentemperatur eingegrenzt werden und es kann gegebenenfalls als erste Näherung für die Probentemperatur der arithmetische Mittelwert der gemessenen Temperaturen angenommen werden.

Die Sensoreinrichtung 100 weist außerdem eine Aussparung 100.1 auf, in welcher ein elektrischer Steckverbinder 155 angeordnet ist, welcher durch eine Seitenwand der Aussparung 100.1 geführt ist und im Inneren des Sensorgehäuses 110 mit einer ersten Schaltungsplatine 160 verbunden ist, wie weiter unten noch gezeigt werden wird. Über den elektrischen Steckverbinder 155 können Ausgangssignale der Sensoren drahtgebunden an eine zentrale Steuereinrichtung der Bewitterungsvorrichtung 10 übertragen werden. Die Datenübertragung kann mittels eines seriellen Bussystems erfolgen, welches beispielsweise auf dem USB-Standard beruht. Der elektrische Steckverbinder 155 ist vorteilhafterweise in Längsrichtung in der Aussparung 100.1 orientiert, so dass ein mit dem elektrischen Steckverbinder 155 verbundenes Kabel in Längsrichtung von der Sensoreinrichtung 100 weggeführt werden kann.

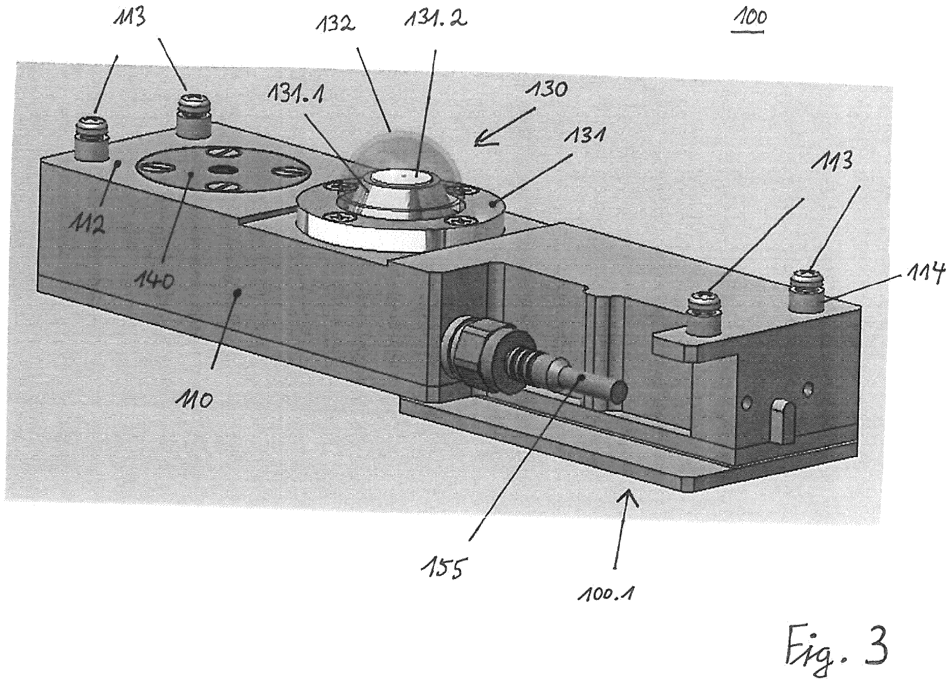

Die Fig. 3 zeigt eine perspektivische Ansicht der Sensoreinrichtung 100 nach Entfernen der Platte 111 und dem darauf angeordneten Schwarzstandardsensor 120. Die Sensoreinrichtung 100 kann demnach noch weitere Sensoren aufweisen, welche ebenfalls an der ersten Außenwand 112 des Sensorgehäuses 110 angeordnet sein können. Dem Schwarzstandardsensor 120 benachbart ist ein UV-Strahlungssensor 130 angeordnet, welcher somit im eingesetzten Zustand der Sensoreinrichtung 100 und im Betrieb der Bewitterungsvorrichtung 10 ebenfalls der Strahlungsquelle 4 zugewandt ist. Der UV-Strahlungssensor 130 bzw. dessen oberer Teil ist innerhalb eines ersten Flanschs 131 montiert, welcher eine zentrale kreisförmige Aussparung aufweist, innerhalb der eine sich nach oben verjüngende, kegelstumpfförmige Erhebung 131.1 angeordnet ist, welche an ihrem oberen abgeflachten Ende eine Eintrittsöffnung aufweist, in der eine Streuscheibe 131.2 angeordnet ist. Die Streuscheibe 131.2 sorgt für eine cosϕ-Korrektur der eintretenden Strahlung, wie weiter oben bereits erläutert worden ist. Die Eintrittsöffnung befindet sich oberhalb der oberen Oberfläche des ersten Flanschs 131. Um die kegelstumpfförmige Erhebung 131.1 ist eine halbkugelförmige Schutzwand 132 aus Quarzglas angeordnet, welche mit ihrem unteren Rand in die Ausnehmung des ersten Flanschs 131 eingesetzt ist. In der Platte 111 ist, wie in Fig. 2 zu sehen ist, in dem Bereich des UV-Strahlungssensors 130 eine Öffnung 111.1 geformt, durch die sich der obere Teil der kegelstumpfförmigen Erhebung 131 und die halbkugelförmige Schutzwand 132 erstrecken.

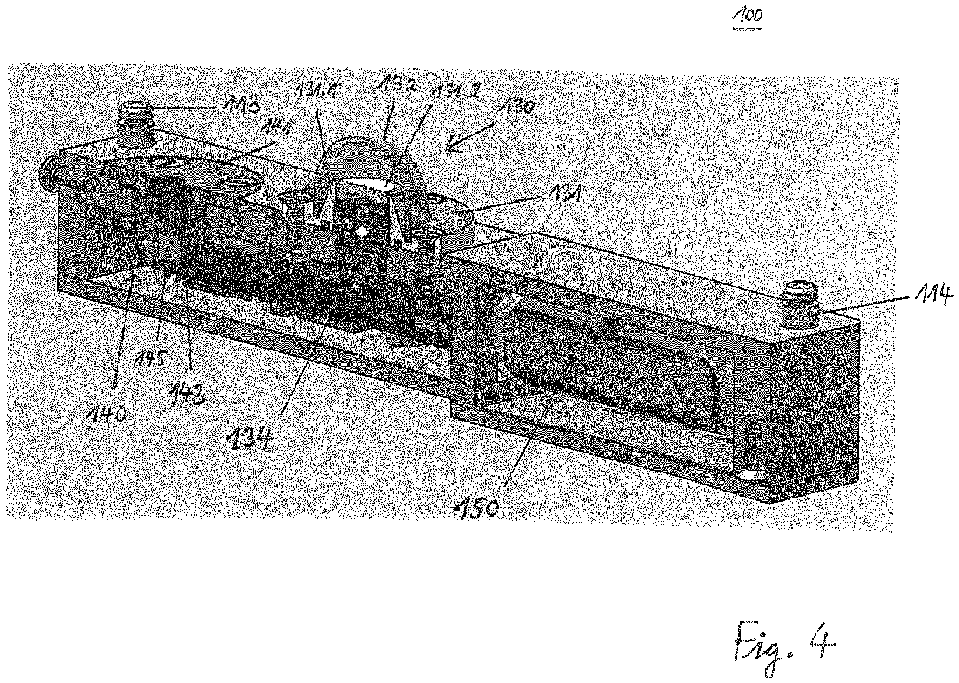

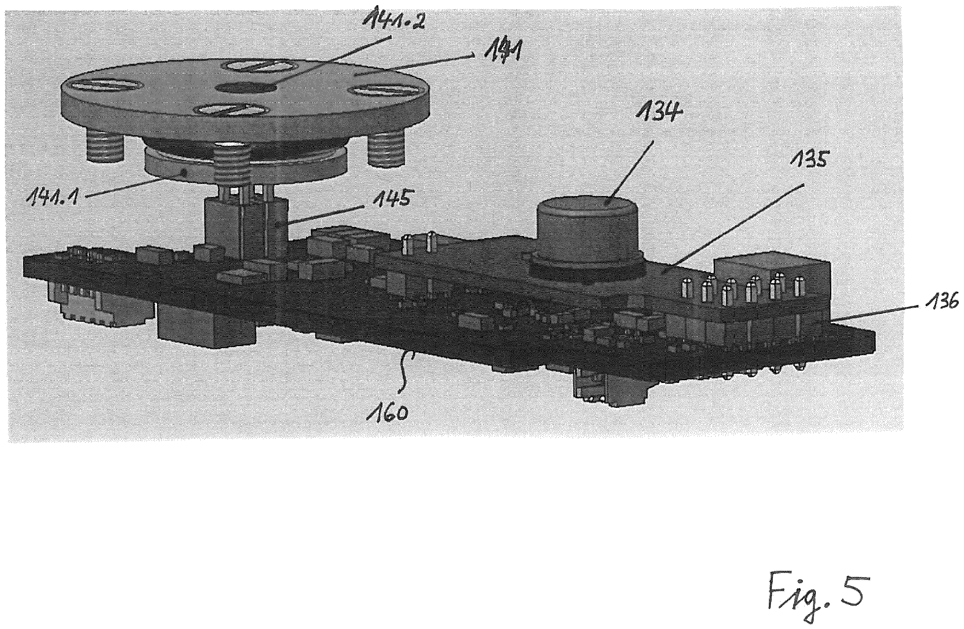

Die Fig. 4 zeigt einen Längsschnitt durch die Sensoreinrichtung 100, in welchem zu sehen ist, dass der UV-Strahlungssensor 130 ferner ein standardmäßiges TO5-Gehäuse 134 aufweisen kann, innerhalb dessen die eigentliche Lichtempfangsdiode angeordnet ist. In der Fig. 4 und der Fig. 5 ist gezeigt, dass das TO5-Gehäuse 134 auf einer zweiten Schaltungsplatine 135 montiert ist. Der UV-Strahlungssensor 130 weist des Weiteren ein UV-Strahlungsfilter auf, welches unterhalb der Streuscheibe 131.2 im Strahlengang angeordnet ist. Wie man in Fig. 4 sehen kann, ist der obere Teil des TO5-Gehäuses 134 innerhalb einer Öffnung in der ersten Außenwand 112 des Sensorgehäuses 110 angeordnet, welche zylindersymmetrisch zu dem ersten Flansch 131 und der kegelstumpfförmigen Erhebung 131.1 angeordnet ist.

Wie in Fig. 3 bis Fig. 5 zu sehen ist, ist der erste Flansch 131 mittels vier Schrauben an der ersten Außenwand 112 des Sensorgehäuses 110 angeschraubt.

Wie bereits in Fig. 2 und Fig. 3 andeutungsweise zu sehen ist, kann ausserdem in dem Sensorgehäuse 110 ein kombinierter Lufttemperatur-/Luftfeuchtigkeitssensor 140 angeordnet sein, welcher an einem zweiten Flansch 141 montiert ist. Der zweite Flansch 141 kann ebenfalls mit vier Schrauben an der ersten Außenwand 112 des Sensorgehäuses 110 befestigt sein. Der zweite Flansch 141 ist auch noch mal in der Fig. 5 in größerem Detail in der linken Bildhälfte zu sehen. Der zweite Flansch 141 weist eine zentrale Öffnung 141.2 auf, unterhalb der ein ggf. kommerziell erhältliches Sensor-Package 142 angeordnet ist, in welchem ein Lufttemperatursensor und ein Luftfeuchtigkeitssensor enthalten ist. Das Sensor-Package 142 ist in der Fig. 7 vergrößert dargestellt. Es weist an seiner Oberseite eine dampfdurchlässige und/oder mikroporöse Membran 142.1 auf, durch welche die Umgebungsluft zu dem kombinierten Sensor vordringen kann. Im zusammengebauten Zustand der Sensoreinrichtung 100 befindet sich die Platte 111 oberhalb der zentralen Öffnung 141.2 des zweiten Flanschs 141 und deckt somit die Eintrittsöffnung zu dem Sensor-Package 142 ab, so dass im eingesetzten Zustand der Sensoreinrichtung 100 in einer Bewitterungsvorrichtung 10 bei deren Betrieb die Strahlung der Strahlungsquelle 4 nicht zu der Eintrittsöffnung des Sensor-Package 142 gelangen kann.

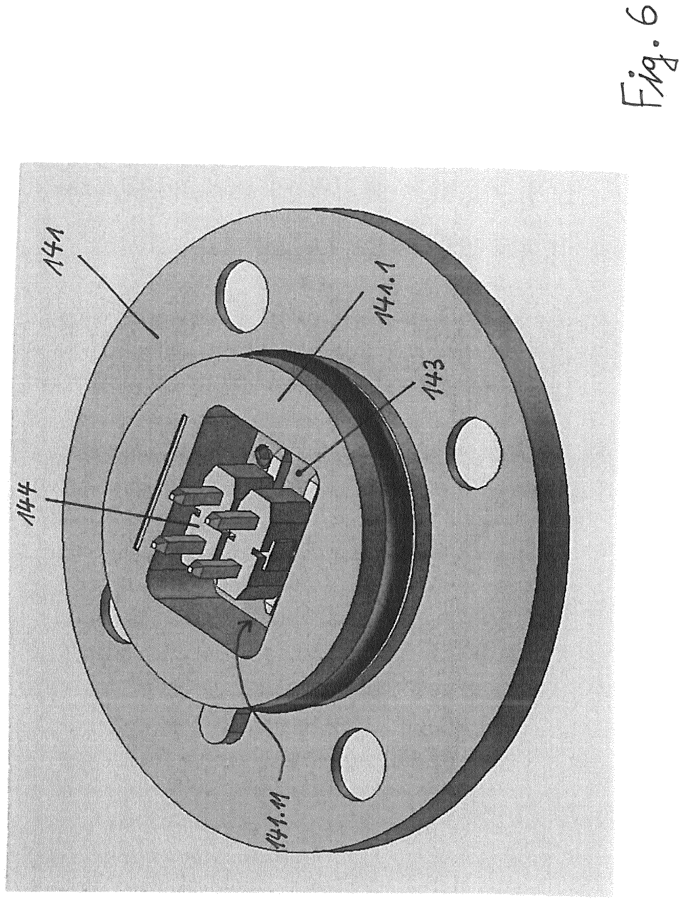

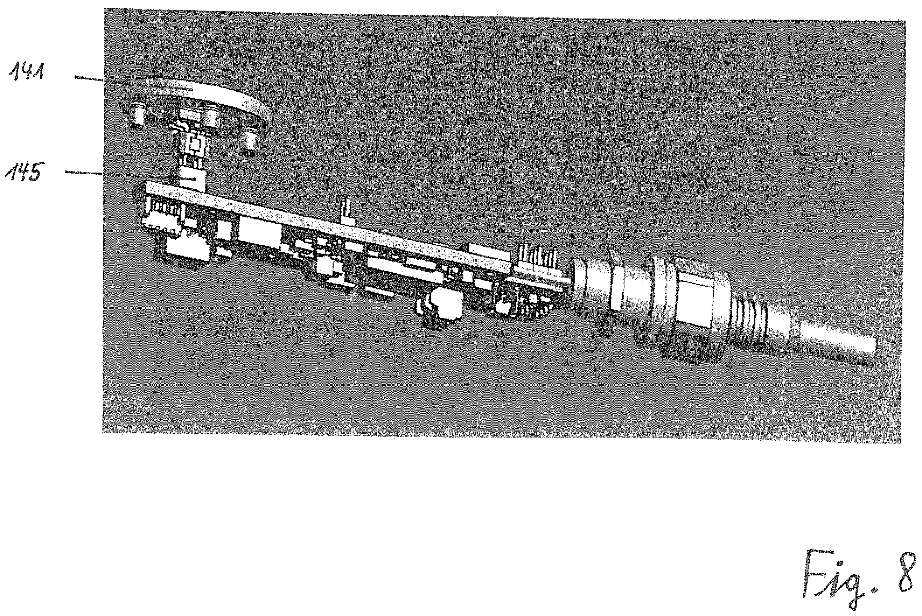

Die Fig. 6 zeigt eine perspektivische Ansicht des zweiten Flanschs 141 von unten. Der zweite Flansch 141 weist eine zentrale scheibenförmige Erhebung 141.1 auf, welche eine im Querschnitt rechteckförmige Aussparung 141.11 aufweist, in deren unten liegendem Bereich die Platine 143 angeordnet ist. Auf der in Blickrichtung abgewandten Seite der Platine 143 ist das Sensor-Package 142 (in Fig. 6 nicht direkt zu sehen) mit der Platine 143 verbunden. Auf der in Blickrichtung sichtbaren, vorderen Seite der Platine 143 ist ein Steckersystem 144 mit der Platine 143 verbunden, dessen Steckkontakte durch die Platine 143 mit entsprechenden elektrischen Kontakten des Sensor-Package 142 verbunden sind. Der räumliche Bereich um das Steckersystem 144 innerhalb der Ausnehmung 141.11 wird mit einer Vergussmasse, wie beispielsweise einem Epoxidharz, vergossen. Wie in Fig. 4 und in Fig. 8 und in noch größerem Detail in Fig. 5 zu sehen ist, werden die Steckerkontakte dann in einen Steckverbinder 145 eingeschoben, dessen Ausgänge mit der ersten Schaltungsplatine 160 verbunden werden. Die zweite Schaltungsplatine 135 wird ihrerseits ebenso mittels Steckverbindern 136 mit der ersten Schaltungsplatine 160 verbunden.

In der Fig. 4 ist ferner gezeigt, dass die Sensoreinrichtung 100 eine Batterie 150 aufweisen kann, welche innerhalb einer Kammer direkt unterhalb des Schwarztafelsensors 120 angeordnet sein kann. Die Batterie 150 kann als Hochtemperatur-Batterie ausgelegt sein, d.h. bis zu einer Temperatur von beispielsweise 80°C ausgelegt sein. Die Batterie 150 dient als elektrische Leistungsversorgung für die Sensoren als auch für die elektrische Schaltung und die in ihr enthaltenen Komponenten wie die Steuereinrichtung, Speicher, etc.

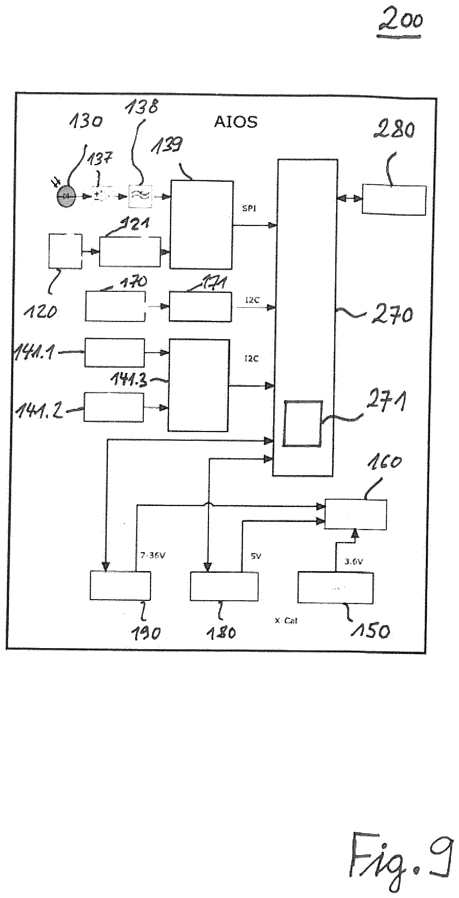

In der Fig. 9 ist ein Blockschaltbild eines elektrischen Schaltkreises einer Sensoreinrichtung dargestellt. Der dargestellte Schaltkreis 200 enthält elektrische Bauelemente, wie sie auf den elektrischen Schaltungsplatinen 135 und 160 aufgebracht sind. Der Schaltkreis 200 weist eine Steuereinheit 270 auf, welchem Ausgangssignale der Sensoren zuführbar sind. Die Steuereinheit 270 kann durch einen Mikroprozessor oder Mikrocontroller an sich bekannter Bauart gebildet sein. Mit der Steuereinheit 270 ist eine erste Speichereinheit 280 bidirektional verbunden, auf welcher Daten gespeichert sein können, welche für den UV-Strahlungssensor 130 spezifisch sind. Die erste Speichereinheit 280 kann durch einen DRAM-Speicher, insbesondere einem ferroelektrischen DRAM-Speicher (FRAM) gebildet sein. Die Steuereinheit 270 kann des Weiteren eine zweite Speichereinheit 271 aufweisen, auf welcher Daten gespeichert sein können, welche für eine Strahlungsquelle der Bewitterungsvorrichtung spezifisch sind. Die Steuereinheit 270 kann auf der ersten Schaltungsplatine 160 montiert sein. Der UV-Strahlungssensor 130 ist ausgangsseitig mit einem Verstärker 137 und einem Tiefpassfilter 138 verbunden, dessen Ausgang mit einem A/D-Wandler 139 verbunden ist. Der Schwarzstandardsensor 120 ist ausgangsseitig mit einer Signalaufbereitungsschaltung 121 verbunden, deren Ausgang mit dem A/D-Wandler 139 verbunden ist. Der A/D-Wandler 139 ist ausgangsseitig mit der Steuereinheit 270 verbunden. Ein Lufttemperatursensor 141.1 und ein Luftfeuchtigkeitssensor 141.2 sind jeweils ausgangsseitig mit einem Datenprozessor 141.3 verbunden, dessen Ausgang mit der Steuereinheit 270 verbunden ist. Ein weiterer Temperatursensor 170 ist auf einer der Schaltungsplatinen angeordnet, ausgangsseitig mit einer Signalaufbereitungs-Schaltung 171 verbunden, welche ihrerseits ausgangsseitig mit der Steuereinheit 270 verbunden ist. In dem Schaltkreis 200 ist ferner eine Batterie 150, eine mit der Batterie 150 verbundene Leistungsversorgungs-/Leistungssteuerungs-Schaltung 160, ein mit der Schaltung 160 verbundenes USB-Interface 180 und ein mit der Schaltung 160 verbundenes 485/422-Interface 190 enthalten.

## Patentansprüche

1. Sensoreinrichtung (100) für eine Vorrichtung (10) zur Bewitterung oder Lichtechtheitsprüfung von Proben, umfassend:
ein Sensorgehäuse (110), welches innerhalb einer Vorrichtung (10) zur Bewitterung oder Lichtechtheitsprüfung von proben anordenbar ist und mit welchem mindestens zwei Sensoren aus einer Gruppe enthaltend
einen Schwarztafel- oder Schwarzstandardsensor (120),
einen UV-Strahlungssensor (130),
einen Lufttemperatursensor, und
einen Luftfeuchtigkeitssensor
verbunden sind,
wobei
das Sensorgehäuse (110) eine äußere Wand (111) aufweist, an welcher ein Schwarztafel- oder Schwarzstandardsensor (120) befestigt ist, **dadurch gekennzeichnet, dass**
die äußere Wand (111) durch eine von einer ersten Außenwand (112) des Sensorgehäuses (110) beabstandete Platte (111) gebildet ist.

2. Sensoreinrichtung (100) nach Anspruch 1, bei welcher
ein UV-Strahlungssensor (130) mit dem Sensorgehäuse (110) verbunden ist, und
in der Platte (111) und in der ersten Außenwand (112) Strahlungsdurchtrittsöffnungen für den Durchtritt von UV-Strahlung gebildet sind.

3. Sensoreinrichtung (100) nach einem der vorhergehenden Ansprüche, bei welcher
ein Lufttemperatursensor und ein Luftfeuchtigkeitssensor mit dem Sensorgehäuse (110) verbunden sind, und
in einer Außenwand (112) des Sensorgehäuses (110) eine Luftdurchtrittsöffnung für den Durchtritt von Umgebungsluft zu dem Lufttemperatursensor und dem Luftfeuchtigkeitssensor gebildet ist.

4. Sensoreinrichtung (100) nach einem der vorhergehenden Ansprüche, bei welcher
die Platte (111) die Luftdurchtrittsöffnung überdeckt.

5. Sensoreinrichtung (100) nach einem der vorhergehenden Ansprüche, bei welcher
innerhalb des Sensorgehäuses (110) eine Batterie (150) oder ein Akkumulator angeordnet ist.

6. Sensoreinrichtung (100) nach einem der vorhergehenden Ansprüche, bei welcher
innerhalb des Sensorgehäuses (110) eine erste Schaltungsplatine (160) angeordnet ist, auf welcher eine Steuereinheit (270) angeordnet ist, welcher Ausgangssignale der Sensoren zuführbar sind.

7. Sensoreinrichtung (100) nach Anspruch 6, bei welcher auf der ersten Schaltungsplatine (160) eine erste Speichereinheit (280) angeordnet ist, auf welcher Daten gespeichert sind, welche für den UV-Strahlungssensor (130) spezifisch sind.

8. Sensoreinrichtung (100) nach Anspruch 7, bei welcher
die erste Speichereinheit (280) einen DRAM-Speicher, insbesondere einen ferroelektrischen DRAM-Speicher (FRAM) aufweist.

9. Sensoreinrichtung (100) nach einem der Ansprüche 6 bis 8, bei welcher
die Steuereinheit (270) eine Speichereinheit (271) aufweist, auf welcher Daten gespeichert sind, welche für eine Strahlungsquelle der Sensoreinrichtung (100) spezifisch sind.

## Claims

1. A sensor device (100) for a device (10) for weathering or lightfastness testing of samples, comprising:
a sensor housing (110) which can be arranged within a device (10) for weathering or lightfastness testing of samples and with which at least two sensors from a group comprising
a black panel or black standard sensor (120),
a UV radiation sensor (130),
an air temperature sensor, and
a humidity sensor,
wherein
the sensor housing (110) has an outer wall (111) to which a black panel or black standard sensor (120) is mounted,
**characterized in that**
the outer wall (111) is formed by a plate (111) spaced from a first outer wall (112) of the sensor housing (110).

2. The sensor device (100) according to claim 1, in which
a UV radiation sensor (130) is connected to the sensor housing (110), and
radiation passage openings for the passage of UV radiation are formed in the plate (111) and in the first outer wall (112).

3. The sensor device (100) according to one of the preceding claims, wherein
an air temperature sensor and a humidity sensor are connected to the sensor housing (110); and
an air passage opening for the passage of ambient air to the air temperature sensor and the humidity sensor is formed in an outer wall (112) of the sensor housing (110).

4. The sensor device (100) according to one of the preceding claims in which
the plate (111) covers the air passage opening.

5. The sensor device (100) according to any of the foregoing, in which
a battery (150) or an accumulator is disposed within the sensor housing (110).

6. The sensor device (100) according to one of the preceding claims in which
a first circuit board (160) is arranged within the sensor housing (110), on which first circuit board (160) a control unit (270) is arranged, to which output signals of the sensors can be supplied.

7. The sensor device (100) according to claim 6, in which
a first memory unit (280) on which data specific to the UV radiation sensor (130) is stored is arranged on the first circuit board (160).

8. The sensor device (100) according to claim 7 in which
the first memory unit (280) comprises a DRAM memory, in particular a ferroelectric DRAM memory (FRAM).

9. The sensor device (100) according to one of claims 6 to 8, in which
the control unit (270) comprises a memory unit (271) on which data specific to a radiation source of the sensor means (100) is stored.

## Revendications

1. Un dispositif capteur (100) pour un dispositif (10) destiné à tester la résistance aux intempéries ou à la lumière d'échantillons, comprenant :
un boîtier de capteur (110) qui peut être disposé à l'intérieur d'un dispositif (10) pour tester la résistance aux intempéries ou à la lumière d'échantillons et avec lequel au moins deux capteurs appartenant à un groupe comprenant
un panneau noir ou un capteur standard noir (120),
un capteur de rayonnement UV (130),
une sonde de température de l'air, et
un capteur d'humidité,
dans laquelle
le boîtier de capteur (110) présente une paroi extérieure (111) sur laquelle est monté un panneau noir ou un capteur standard noir (120),
**caractérisé en ce que**
la paroi extérieure (111) est formée par une plaque (111) espacée d'une première paroi extérieure (112) du boîtier de capteur (110) .

2. Le dispositif capteur (100) selon la revendication 1, dans lequel
un capteur de rayonnement UV (130) est raccordé au boîtier du capteur (110), et
des ouvertures de passage du rayonnement pour le passage du rayonnement UV sont formées dans la plaque (111) et dans la première paroi extérieure (112).

3. Le dispositif capteur (100) selon l'une des revendications précédentes, dans lesquel
un capteur de température de l'air et un capteur d'humidité sont raccordés au boîtier du capteur (110) ; et
une ouverture de passage d'air pour le passage de l'air ambiant vers le capteur de température de l'air et le capteur d'humidité est formée dans une paroi extérieure (112) du boîtier du capteur (110) .

4. Le dispositif capteur (100) selon l'une des revendications précédentes, dans lesquel
la plaque (111) recouvre l'ouverture de passage d'air.

5. Le dispositif capteur (100) selon l'une des revendications précédentes, dans lesquel
une pile (150) ou un accumulateur est disposé dans le boîtier du capteur (110).

6. Le dispositif capteur (100) selon l'une des revendications précédentes, dans lesquel
une première carte de circuit imprimé (160) est disposée à l'intérieur du boîtier de capteur (110), sur laquelle est disposée une unité de commande (270), à laquelle des signaux de sortie des capteurs peuvent être fournis.

7. Le dispositif capteur (100) selon la revendication 6, dans lequel
une première unité de mémoire (280) sur laquelle des données spécifiques au capteur de rayonnement UV (130) sont stockées est disposée sur la première carte de circuit imprimé (160).

8. Le dispositif capteur (100) selon la revendication 7, dans lesquel
la première unité de mémoire (280) comprend une mémoire DRAM, en particulier une mémoire DRAM ferroélectrique (FRAM).

9. Le dispositif capteur (100) selon l'une des revendications 6 à 8, dans lequel
l'unité de commande (270) comprend une unité de mémoire (271) sur laquelle des données spécifiques à une source de rayonnement du moyen capteur (100) sont stockées.
